(19) Europäisches Patentamt
European Patent Office
Office européen des brevets

(11) Veröffentlichungsnummer: **0 413 229 B1**

# (12) EUROPÄISCHE PATENTSCHRIFT

(45) Veröffentlichungstag der Patentschrift: **19.10.94**

(51) Int. Cl.⁵: **C09B 29/42**, B41M 5/26, D06P 1/18

(21) Anmeldenummer: **90115112.6**

(22) Anmeldetag: **07.08.90**

## (54) Phenonazofarbstoffe und Verfahren zum thermischen Transfer dieser Farbstoffe.

(30) Priorität: **16.08.89 DE 3927069**

(43) Veröffentlichungstag der Anmeldung:
**20.02.91 Patentblatt 91/08**

(45) Bekanntmachung des Hinweises auf die Patenterteilung:
**19.10.94 Patentblatt 94/42**

(84) Benannte Vertragsstaaten:
**CH DE FR GB IT LI**

(56) Entgegenhaltungen:
**EP-A- 0 061 667**
**EP-A- 0 302 401**
**DE-A- 2 157 229**
**DE-A- 3 709 567**

(73) Patentinhaber: **BASF Aktiengesellschaft**
**Carl-Bosch-Strasse 38**
**D-67063 Ludwigshafen (DE)**

(72) Erfinder: **Bach, Volker, Dr.**
**Robert-Schuman-Strasse 8**
**D-6730 Neustadt (DE)**
Erfinder: **Hansen, Guenter, Dr.**
**Alwin-Mittasch-Platz 8**
**D-6700 Ludwigshafen (DE)**
Erfinder: **Lamm, Gunther, Dr.**
**Heinrich-Heine-Strasse 7**
**D-6733 Hassloch (DE)**
Erfinder: **Sens, Ruediger, Dr.**
**Medicusstrasse 12**
**D-6800 Mannheim 1 (DE)**

EP 0 413 229 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Phenonazofarbstoffe der Formel I

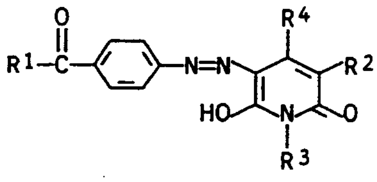

(I),

in der

$R^1$ einen Rest der Formel

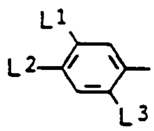

,

wobei $L^1$, $L^2$ und $L^3$ gleich oder verschieden sind und unabhängig voneinander jeweils für Wasserstoff, $C_1$-$C_4$-Alkyl oder $C_1$-$C_4$-Alkoxy stehen,

$R^2$ Cyano, Carbamoyl oder Acetyl,

$R^3$ $C_4$-Alkyl oder $C_3$-$C_{12}$-Alkyl, das durch 1 bis 3 Sauerstoffatome unterbrochen ist und durch $C_1$-$C_4$-Alkanoyloxy, Cyclohexyloxy, Phenoxy, das gegebenenfalls durch $C_1$-$C_4$-Alkoxy substituiert ist, oder Phenyl substituiert sein kann, und

$R^4$ Wasserstoff oder $C_1$-$C_4$-Alkyl bedeuten,

mit der Maßgabe, daß

a) die Reste $L^1$, $L^2$ und $L^3$ nicht gleichzeitig für Wasserstoff stehen, und

b) wenn zwei der Reste aus der Menge $L^1$, $L^2$ und $L^3$ Wasserstoff bedeuten, der dritte Rest für $C_1$-$C_4$-Alkoxy steht,

sowie ein Verfahren zum thermischen Transfer von Phenonazofarbstoffen.

Aus der DE-A-2 001 821, DE-A-2 157 229 sowie der EP-A-302 401 sind bereits Azofarbstoffe bekannt, deren Diazokomponente sich von einem Aminobenzophenon ableitet und deren Kupplungskomponente ein Hydroxypyridon darstellt.

Aufgabe der vorliegenden Erfindung war es nun, neue Phenonazofarbstoffe bereitszustellen, die als Dispersionsfarbstoffe geeignet sind und über ein vorteilhaftes anwendungstechnisches Eigenschaftsprofil verfügen.

Demgemäß wurden die eingangs näher bezeichneten Phenonazofarbstoffe der Formel I gefunden.

Alle in den Phenonazofarbstoffen der Formel I sowie der später folgenden Formel II auftretenden Alkylgruppen können sowohl geradkettig als auch verzweigt sein.

Reste $Y^1$, $L^1$, $L^2$ und $L^3$ sind z.B. Methyl, Ethyl, Propyl, Isopropyl, Butyl, Isobutyl oder sec-Butyl.

Reste $Y^1$ sind weiterhin z.B. Methoxymethyl, Ethoxymethyl, 2-Methoxyethyl oder 2-Ethoxyethyl.

Reste $L^1$, $L^2$ und $L^3$ sind weiterhin z.B. Methoxy, Ethoxy, Propoxy, Isopropoxy, Butoxy, Isobutoxy oder sec-Butoxy.

Reste $R^3$ sind z.B. Butyl, Isobutyl, sec.-Butyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 3,6,9-Trioxadecyl, 3,6,9-Trioxaundecyl, 8-Acetyloxy-4-oxaoctyl, 3-Cyclohexyloxypropyl, 3-Benzyloxypropyl oder 6-Phenoxy-4-oxahexyl.

Bevorzugt sind Phenonazofarbstoffe der Formel I, in der

$R^1$ einen Rest der Formel

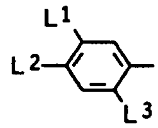,

in der zwei der Reste aus der Menge $L^1$, $L^2$ und $L^3$ für Wasserstoff und der dritte Rest für $C_1$-$C_2$-Alkoxy oder zwei der Reste aus der Menge $L^1$, $L^2$ und $L^3$ für Methyl und der dritte Rest für Wasserstoff stehen,

$R^2$ Cyano und
$R^4$ Methyl bedeuten und
$R^3$ die obengenannte Bedeutung besitzt.

Die Herstellung der erfindungsgemäßen Phenonfarbstoffe der Formel I erfolgt auf an sich bekannte Weise.

Beispielsweise kann man ein Aminophenon der Formel III

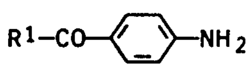 (III),

in der $R^1$ die obengenannte Bedeutung besitzt, in üblicher Weise diazotieren und mit einem Pyridon der Formel IV

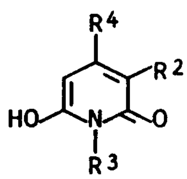 (IV),

in der $R^2$, $R^3$ und $R^4$ jeweils die obengenannte Bedeutung besitzen, kuppeln.

Die Herstellung der Aminophenone der Formel III sowie der Pyridone der Formel IV ist an sich bekannt und z.B. in der EP-A-66 153, in der eingangs erwähnten EP-A-302 401 sowie in der dort genannten Literatur beschrieben oder kann analog diesen Methoden erfolgen.

Die neuen Farbstoffe der Formel I eignen sich zum Färben oder Bedrucken von synthetischen Geweben, insbesondere von Polyestergeweben. Man erhält dabei Ausfärbungen oder Drucke, die hohe Naßechtheiten sowie eine gute Lichtechtheit aufweisen. Insbesondere zeichnen sich die neuen Farbstoffe durch ihre hohe Farbstärke aus.

Man kann dabei die neuen Farbstoffe I sowohl als Einzelkomponenten wie auch als Mischungen untereinander (z.B. im Gewichtsverhältnis von 50:50 bis 99:1) anwenden.

Eine weitere Aufgabe der vorliegenden Erfindung war es, ein neues Verfahren zur Übertragung von Azofarbstoffen von einem Träger auf ein mit Kunststoff beschichtetes Papier bereitzustellen, wobei die Farbstoffe folgende Eigenschaften besitzen sollten:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischungen die geeigneten Farbtöne aufweisen,
- einen hohen molaren Absorptionskoeffizienten aufweisen,
- bei Lagerung des Transferblattes nicht auskristallisieren,
- technisch leicht zugänglich sein.

Es wurde nun weiter gefunden, daß die Übertragung von Azofarbstoffen von einem Träger auf ein mit Kunststoff beschichtetes Papier durch Diffusion mit Hilfe eines Thermokopfes vorteilhaft gelingt, wenn man einen Träger verwendet, auf dem sich ein oder mehrere Azofarbstoffe der Formel II

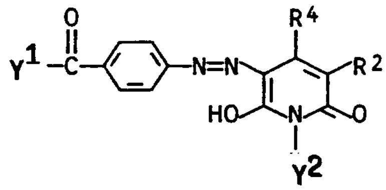 (II)

befinden, in der

$Y^1$ $C_1$-$C_4$-Alkyl, das gegebenenfalls durch $C_1$-$C_4$-Alkoxy substituiert ist, oder einen Rest der Formel

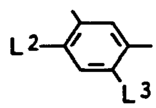 ,

wobei $L^1$, $L^2$ und $L^3$ gleich oder verschieden sind und unabhängig voneinander jeweils für Wasserstoff, $C_1$-$C_4$-Alkyl oder $C_1$-$C_4$-Alkoxy stehen,

$R^2$ Cyano, Carbamoyl oder Acetyl,

$Y^2$ $C_1$-$C_4$-Alkyl oder $C_3$-$C_{12}$-Alkyl, das durch 1 bis 3 Sauerstoffatome unterbrochen ist und durch $C_1$-$C_4$-Alkanoyloxy, Cyclohexyloxy, Phenoxy, das gegebenenfalls durch $C_1$-$C_4$-Alkoxy substituiert ist, oder Phenyl substituiert sein kann, und

$R^4$ Wasserstoff oder $C_1$-$C_4$-Alkyl bedeuten,

mit der Maßgabe, daß die Reste $L^1$, $L^2$ und $L^3$ nicht gleichzeitig für Wasserstoff stehen.

Zur Herstellung der für das neue Verfahren benötigten Farbstoffträger werden die Farbstoffe in einem geeigneten organischen Lösungsmittel, z. B. Chlorbenzol, Isobutanol, Methylethylketon, Methylenchlorid, Toluol, Tetrahydrofuran oder deren Mischungen mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe wird mittels einer Rakel auf den inerten Träger aufgetragen und die Färbung an der Luft getrocknet. Als Bindemittel kommen alle Resins oder Polymermaterialien in Betracht, welche in organischen Lösungsmitteln löslich sind und den Farbstoff an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z. B. Methylcellulose, Ethylcellulose, Ethylhydroxyethylcellulose, Hydroxypropylcellulose, Celluloseacetat oder Celluloseacetobutyrat, Stärke, Alginate, Alkydresins, Vinylresins, Polyvinylalkohol, Polyvinylacetat, Polyvinylbutyrat oder Polyvinylpyrrolidone. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A- 3 524 519 beschrieben.

Bevorzugte Bindemittel sind Ethylcellulose oder Ethylhydroxyethylcellulose mittlerer bis kleiner Viskositätseinstellungen.

Das Verhältnis Bindemittel zu Farbstoff variiert vorzugsweise zwischen 5:1 und 1:1.

Als Hilfsmittel kommen z.B. Trennmittel in Betracht, wie sie in der EP-A-227 092, EP-A-192 435 oder den dort zitierten Patentanmeldungen spezifiziert sind, darüber hinaus besonders organische Additive, welche das Auskristallisieren der Transferfarbstoffe bei Lagerung und beim Erhitzen des Farbbandes verhindern, z. B. Chlolesterin oder Vanillin. Inerte Träger sind z. B. Seiden-, Lösch- oder Pergaminpapier oder Kunststoffolien mit guter Wärmebeständigkeit, z. B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben des Thermokopfes mit dem Trägermaterial zu verhindern. Geeignete Gleitmittel werden z. B. in der EP-A-216 483 oder EP-A-227 095 beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht. Ihre Glasumwandlungstemperatur sollte unter 150 °C liegen. Beispielhaft sind modifizierte Polycarbonate oder Polyester zu nennen. Geeignete Rezepturen für die Nehmerschichtzusammensetzung werden z. B. in der EP-A-227 094, EP-A-133 012, EP-A-133 011, EP-A-111 004, JP-A- 199 997/1986, JP-A- 283 595/1986, JP-A- 237 694/1986 oder JP-A- 127 392/1986 ausführlich beschrieben.

Die Übertragung erfolgt mittels eines Thermokopfes, der auf eine Temperatur von ≧ 300 °C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Einzelheiten der Herstellung können den Beispielen entnommen werden, in denen sich Angaben über Prozente, sofern nicht anders vermerkt, auf das Gewicht beziehen.

Herstellung der Farbstoffe

Beispiel 1

24,2 g 4-Amino-2-methoxy-5-methylbenzophenon wurden in 50 g N,N-Dimethylformamid gelöst. Die Lösung wurde auf ein Gemisch aus 30 ml konzentrierter Salzsäure, 300 ml Wasser und 0,5 g eines Dispergiermittels (Anlagerungsprodukt von Ethylenoxid an Oleylamin) ausgerührt. Man kühlte und diazotierte bei 0 bis 5 °C durch Zugabe von 32,5 ml einer 23 gew.-%igen Natriumnitritlösung. Dann rührte man 2 Stunden bei 0 bis 5 °C nach, zerstörte den Nitritüberschuß mit Amidosulfonsäure und ließ das Diazoniumsalz auf eine Lösung von 32,8 g des Pyridons der Formel

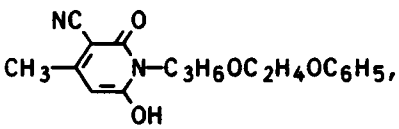

in 1000 ml Wasser und 8 g Soda, so einlaufen, daß der pH-Wert des Kupplungsgemisches stets >8 bis ca. 10 betrug. Als säurebindendes Mittel wurde Soda verwendet. Das Reaktionsgemisch wurde 2 Stunden bei pH 8,5 bis 9,5 gerührt. Dann erhitzte man auf 50 °C und isolierte den Farbstoff der Formel

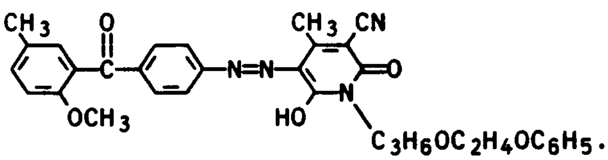

Nach Waschen mit Wasser und Trocknen erhielt man 56,5 g eines gelben Pulvers, das sich in N,N-Dimethylformamid und Aceton mit gelber Farbe löst und Polyestergewebe nach dem HT-Verfahren in kräftigen buttergelben Tönen mit hoher Thermofixierechtheit sowie ausgezeichneter Lichtechtheit färbt.

Die im folgenden aufgeführten Farbstoffe werden in analoger Weise erhalten.

Tabelle 1

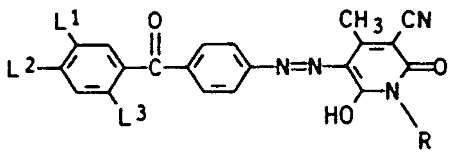

| Bsp. Nr. | $L^1$ | $L^2$ | $L^3$ | R | $\lambda_{max}$ [nm] in Aceton |
|---|---|---|---|---|---|
| 2 | $OCH_3$ | H | $CH_3$ | $C_2H_4OCH_3$ | 432 |
| 3 | $OCH_3$ | H | $CH_3$ | $C_3H_6OCH_3$ | 432 |
| 4 | $OCH_3$ | H | $CH_3$ | $C_2H_4OC_2H_5$ | 432 |
| 5 | $OCH_3$ | H | $CH_3$ | $C_3H_6OC_2H_5$ | 432 |
| 6 | $OCH_3$ | H | $CH_3$ | $C_3H_6OC_4H_8OCOCH_3$ | 432 |
| 7 | $OCH_3$ | H | $CH_3$ | $CH_2(C_2H_4O)_2CH_3$ | 432 |
| 8 | $OCH_3$ | H | $CH_3$ | $CH_2(C_2H_4O)_2C_2H_5$ | 432 |
| 9 | $OCH_3$ | H | $CH_3$ | $CH_2(C_2H_4O)_2C_6H_5$ | 432 |
| 10 | $OCH_3$ | H | $CH_3$ | $CH_2(C_2H_4O)_2C_4H_9$ | 432 |
| 11 | $OCH_3$ | H | $CH_3$ | $CH_2(C_2H_4O)_3C_2H_5$ | 432 |
| 12 | $OCH_3$ | H | $CH_3$ | $C_4H_9(n)$ | 432 |
| 13 | $OCH_3$ | H | $CH_3$ | $C_3H_6OCH_2C_6H_5$ | 432 |
| 14 | $OCH_3$ | H | $CH_3$ | $CH(CH_3)CH_2OCH_3$ | 432 |
| 15 | $CH_3$ | H | $CH_3$ | $CH(CH_3)CH_2OCH_3$ | 431 |
| 16 | $CH_3$ | H | $CH_3$ | $C_4H_9(n)$ | 431 |
| 17 | $CH_3$ | H | $CH_3$ | $CH_2(C_2H_4O)_2C_6H_5$ | 431 |
| 18 | $CH_3$ | H | $CH_3$ | $CH_2(C_2H_4O)_2C_2H_5$ | 431 |
| 19 | $CH_3$ | H | $CH_3$ | $C_3H_6OC_4H_8OCOCH_3$ | 431 |
| 20 | H | $OCH_3$ | H | $C_2H_4OCH_3$ | 434 |

Forts. Tab. 1

| Bsp. Nr. | $L^1$ | $L^2$ | $L^3$ | R | $\lambda_{max}$ [nm] in Aceton |
|---|---|---|---|---|---|
| 21 | H | $OCH_3$ | H | $C_3H_6OCH_3$ | 434 |
| 22 | H | $OCH_3$ | H | $C_2H_4OC_2H_5$ | 435 |
| 23 | H | $OCH_3$ | H | $C_3H_6OC_2H_5$ | 433 |
| 24 | H | $OCH_3$ | H | $C_3H_6OC_4H_8OCOCH_3$ | 433 |
| 25 | H | $OCH_3$ | H | $CH_2(C_2H_4O)_2CH_3$ | 433 |
| 26 | H | $OCH_3$ | H | $CH_2(C_2H_4O)_2C_2H_5$ | 433 |
| 27 | H | $OCH_3$ | H | $CH_2(C_2H_4O)_2C_6H_5$ | 433 |
| 28 | H | $OCH_3$ | H | $CH_2(C_2H_4O)_2C_4H_9$ | 433 |
| 29 | H | $OCH_3$ | H | $CH_2(C_2H_4O)_3C_2H_5$ | 433 |
| 30 | H | $OCH_3$ | H | $C_4H_9(n)$ | 433 |
| 31 | H | $OCH_3$ | H | $C_3H_6OCH_2C_6H_5$ | 433 |
| 32 | H | $OCH_3$ | H | $CH(CH_3)CH_2OCH_3$ | 433 |
| 33 | H | $OCH_3$ | H | $C_3H_6O$— 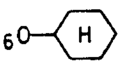 | 433 |
| 34 | H | $OC_2H_5$ | H | $C_3H_6O$— 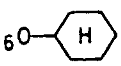 | 433 |
| 35 | H | $OC_2H_5$ | H | $C_2H_4OCH_3$ | 434 |
| 36 | H | $OC_2H_5$ | H | $C_3H_6OCH_3$ | 434 |
| 37 | H | $OC_2H_5$ | H | $C_2H_4OC_2H_5$ | 434 |
| 38 | H | $OC_2H_5$ | H | $C_3H_6OC_2H_5$ | 434 |
| 39 | H | $OC_2H_5$ | H | $C_3H_6OC_4H_8OCOCH_3$ | 434 |
| 40 | H | $OC_2H_5$ | H | $CH_2(C_2H_4O)_2CH_3$ | 434 |
| 41 | H | $OC_2H_5$ | H | $CH_2(C_2H_4O)_2C_2H_5$ | 434 |
| 42 | H | $OC_2H_5$ | H | $CH_2(C_2H_4O)_2C_6H_5$ | 434 |
| 43 | H | | | $CH_2(C_2H_4O)_2C_4H_9$ | 434 |
| 44 | H | $OC_2H_5$ | H | $CH_2(C_2H_4O)_3C_2H_5$ | 434 |

Forts. Tab. 1

| Bsp. Nr. | $L^1$ | $L^2$ | $L^3$ | R | $\lambda_{max}$ [mm] in Aceton |
|---|---|---|---|---|---|
| 45 | H | $OC_2H_5$ | H | $C_4H_9(n)$ | 433 |
| 46 | H | $OC_2H_5$ | H | $C_3H_6OCH_2C_6H_5$ | 434 |
| 47 | H | $OC_2H_5$ | H | $CH(CH_3)CH_2OCH_3$ | 433 |
| 48 | $CH_3$ | $OCH_3$ | H | $CH_2(C_2H_4O)_2C_6H_5$ | 434 |
| 49 | $CH_3$ | $OCH_3$ | H | $CH_2(C_2H_4O)_2C_2H_5$ | 434 |
| 50 | $CH_3$ | H | $OCH_3$ | $C_3H_6O$— 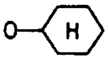 | 434 |
| 51 | $CH_3$ | H | $OCH_3$ | $C_2H_4OCH_3$ | 435 |
| 52 | $CH_3$ | H | $OCH_3$ | $C_3H_6OCH_3$ | 435 |
| 53 | $CH_3$ | H | $OCH_3$ | $C_2H_4OC_2H_5$ | 435 |
| 54 | $CH_3$ | H | $OCH_3$ | $C_3H_6OC_2H_5$ | 435 |
| 55 | $CH_3$ | H | $OCH_3$ | $C_3H_6OC_4H_8OCOCH_3$ | 435 |
| 56 | $CH_3$ | H | $OCH_3$ | $CH_2(C_2H_4O)_2CH_3$ | 435 |
| 57 | $CH_3$ | H | $OCH_3$ | $CH_2(C_2H_4O)_2C_2H_5$ | 435 |
| 58 | $CH_3$ | H | $OCH_3$ | $CH_2(C_2H_4O)_2C_6H_5$ | 435 |
| 59 | $CH_3$ | H | $OCH_3$ | $CH_2(C_2H_4O)_2C_4H_9$ | 435 |
| 60 | $CH_3$ | H | $OCH_3$ | $CH_2(C_2H_4O)_3C_2H_5$ | 435 |

Forts. Tab. 1

| Bsp. Nr. | $L^1$ | $L^2$ | $L^3$ | R | $\lambda_{max}$ [nm] in Aceton |
|---|---|---|---|---|---|
| 61 | $CH_3$ | H | $OCH_3$ | $C_4H_9(n)$ | 435 |
| 62 | $CH_3$ | H | $OCH_3$ | $C_3H_6OCH_2C_6H_5$ | 435 |
| 63 | $CH_3$ | H | $OCH_3$ | $CHCH_2OCH_3$<br>\|<br>$CH_3$ | 435 |
| 64 | $CH_3$ | H | $OC_2H_5$ | $CH_2(C_2H_4O)_2C_6H_5$ | 435 |
| 65 | $OCH_3$ | $CH_3$ | H | $CH_2(C_2H_4O)_2C_6H_5$ | 432 |
| 66 | $CH_3$ | $CH_3$ | H | $CH_2(C_2H_4O)_2C_6H_5$ | 431 |
| 67 | $CH_3$ | $CH_3$ | H | $C_2H_4OCH_3$ | 432 |
| 68 | $CH_3$ | $CH_3$ | H | $C_3H_6OCH_3$ | 432 |
| 69 | $CH_3$ | $CH_3$ | H | $C_2H_4OC_2H_5$ | 432 |
| 70 | $CH_3$ | $CH_3$ | H | $C_3H_6OC_2H_5$ | 432 |
| 71 | $CH_3$ | $CH_3$ | H | $C_3H_6OC_4H_8OCOCH_3$ | 432 |
| 72 | $CH_3$ | $CH_3$ | H | $CH_2(C_2H_4O)_2CH_3$ | 432 |
| 73 | $CH_3$ | $CH_3$ | H | $CH_2(C_2H_4O)_2C_2H_5$ | 432 |
| 74 | $CH_3$ | $CH_3$ | H | $CH_2(C_2H_4O)_2C_6H_5$ | 432 |
| 75 | $CH_3$ | $CH_3$ | H | $CH_2(C_2H_4O)_2C_4H_9$ | 432 |
| 76 | $CH_3$ | $CH_3$ | H | $CH_2(C_2H_4O)_3C_2H_5$ | 432 |
| 77 | $CH_3$ | $CH_3$ | H | $C_4H_9(n)$ | 431 |
| 78 | H | $CH_3$ | $OCH_3$ | $C_3H_6OCH_2C_6H_5$ | 433 |
| 79 | $CH_3$ | $CH_3$ | H | $CHCH_2OCH_3$<br>\|<br>$CH_3$ | 432 |
| 80 | H | $CH_3$ | $OCH_3$ | $CH_2(C_2H_4O)_2C_2H_5$ | 433 |
| 81 | H | $CH_3$ | $OCH_3$ | $C_3H_6OC_2H_5$ | 433 |
| 82 | H | $CH(CH_3)_2$ | H | $CH_2(C_2H_4O)_2C_6H_5$ | 433 |
| 83 | H | $CH(CH_3)_2$ | H | $C_3H_6OCH_2C_6H_5$ | 433 |

Tabelle 2

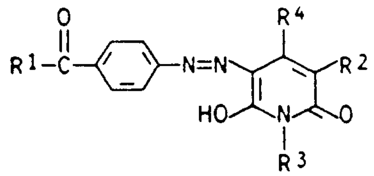

| Bsp. Nr. | $R^1$ | $R^2$ | $R^3$ | $R^4$ | $\lambda_{max}$ [nm] in Aceton |
|---|---|---|---|---|---|
| 84 | 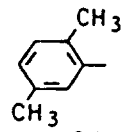 | $CONH_2$ | $C_4H_9(n)$ | $CH_3$ | 423* |
| 85 | 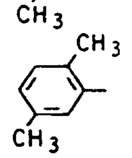 | $COCH_3$ | $C_4H_9(n)$ | $CH_3$ | 424* |

*gemessen in N,N-Dimethylformamid/Eisessig (9 : 1 v/v)

Transfer der Farbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur im Bereich 70 °C < T < 120 °C variierte und die Transferzeit auf 2 Minuten festgelegt wurde.

A) Allgemeines Rezept für die Beschichtung der Träger mit Farbstoff:

X g Bindemittel wurden in 8 ml Toluol/Ethanol (8:2 v/v) bei 40 bis 50 °C gelöst. Dazu wurde eine Lösung aus 0,25 g Farbstoff in 5 ml Tetrahydrofuran eingerührt. Die so erhaltene Druckpaste wurde mit einer 80 µm Rakel auf eine Polyesterfolie (Dicke: 6 bis 10 µm) abgezogen und mit einem Fön getrocknet. (Das Gewichtsverhältnis Farbstoff : Bindemittel, aus dem sich die absolute Bindemittelmenge ableiten läßt, wird im folgenden angegeben.)

B) Prüfung auf thermische Transferierbarkeit

Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches Hitachi Color Video Print Paper (Nehmer) gelegt und aufgedrückt. Geber/Nehmer wurden dann mit Aluminiumfolie umwickelt und zwischen zwei beheizbaren Platten bei verschiedener Temperatur T (im Temperaturintervall 70 °C < T < 120 °C) erhitzt. Die in die glänzende Kunststoffschicht des Nehmens diffundierte Farbstoffmenge ist proportional der optischen Dichte (= Extinktion A). Letztere wurde photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta\left[\frac{1}{T}\right]}$$

Zur vollständigen Charakterisierung wurde aus den Auftragungen zusätzlich die Temperatur T*[ °C] entnommen, bei der die Extinktion A der angefärbten Nehmerpapiere den Wert 2 erreicht.

Die in den folgenden Tabellen 3, 4 und 5 genannten Farbstoffe wurden nach A) verarbeitet und die erhaltenen, mit Farbstoff beschichteten Träger nach B) auf das Transferverhalten geprüft. In den Tabellen sind jeweils die Thermotransferparameter T* und $\Delta E_T$ und die Absorptionsmaxima der Farbstoffe aufgeführt.

In den Beispielen der Tabellen 3 und 4 wurde als Bindemittel jeweils eine Mischung aus Polyvinylbutyrat/Ethylcellulose im Gewichtsverhältnis 2 : 1 verwendet. Das Gewichtsverhältnis Bindemittel : Farbstoff betrug 4 : 1. Die $\lambda_{max}$-Werte wurden auf dem Hitachi Color Video Print Paper bestimmt.

In den Beispielen der Tabelle 5 wurde als Bindemittel Ethylcellulose verwendet. Das Gewichtsverhältnis Bindemittel : Farbstoff betrug 2 : 1. Die $\lambda\text{-}_{max}$-Werte wurden in Methylenchlorid bestimmt.

Tabelle 4

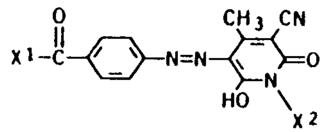

| Bsp. Nr. | $X^1$ | $X^2$ | $\lambda_{max}$ [nm] | T*[°C] | $\Delta E_T$ [kcal/mol] |
|---|---|---|---|---|---|
| 92 | 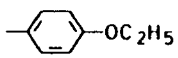 | 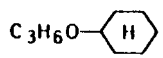 | 440 | 96 | 14 |
| 93 | 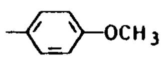 | 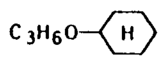 | 440 | 94 | 12 |
| 94 | 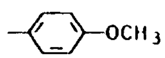 | $C_3H_6OC_2H_5$ | 446 | 104 | 17 |

Tabelle 4 Forts.

| Bsp. Nr. | $X^1$ | $X^2$ | $\lambda_{max}$ [nm] | T*[°C] | $\Delta E_T$ [kcal/mol] |
|---|---|---|---|---|---|
| 95 | 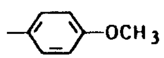 | $C_3H_6OC_2H_4OC_2H_5$ | 438 | 92 | 19 |
| 96 | 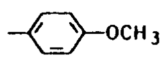 | $C_3H_6OC_2H_4OC_6H_5$ | 438 | 102 | 16 |
| 97 | 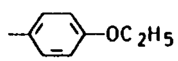 | $C_3H_6OCH_3$ | 437 | 89 | 13 |

Tabelle 5

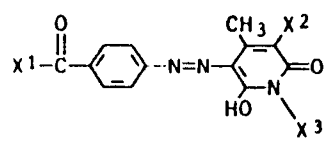

| Bsp. Nr. | X1 | X2 | X3 | $\lambda_{max}$ [nm] | T*[°C] | $\Delta E_T$ [kcal/mol] |
|---|---|---|---|---|---|---|
| 98 | $C_4H_9(n)$ | CN | $C_3H_6OC_2H_4OC_6H_5$ | 431 | 81 | 27 |
| 99 | 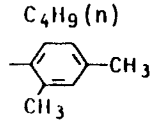 | CN | $C_4H_9(n)$ | 431 | | |

Tabelle 3

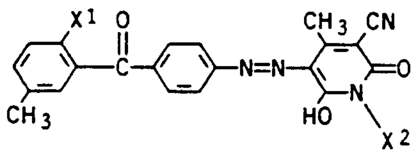

| Bsp. Nr. | $X^1$ | $X^2$ | $\lambda_{max}$ [nm] | T*[°C] | $\Delta E_T$ [kcal/mol] |
|---|---|---|---|---|---|
| 86 | $OCH_3$ | $C_3H_6O$– 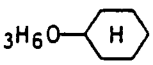 | 440 | 92 | 13 |
| 87 | $OCH_3$ | $C_4H_9$ | 444 | 92 | 13 |
| 88 | $OCH_3$ | $C_3H_6OCH_3$ | 444 | 85 | 13 |
| 89 | $OCH_3$ | $C_3H_6OC_2H_5$ | 443 | 84 | 15 |
| 90 | $OCH_3$ | $CH_2(C_2H_4O)_2C_6H_5$ | 440 | 88 | 12 |
| 91 | $CH_3$ | $C_4H_9$ | 439 | 78 | 16 |

**Patentansprüche**

**1.** Phenonazofarbstoffe der Formel I

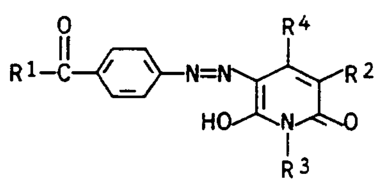

(I),

in der

$R^1$ einen Rest der Formel

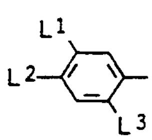

,

wobei $L^1$, $L^2$ und $L^3$ gleich oder verschieden sind und unabhängig voneinander jeweils für Wasserstoff, $C_1$-$C_4$-Alkyl oder $C_1$-$C_4$-Alkoxy stehen,

$R^2$ Cyano, Carbamoyl oder Acetyl,

$R^3$ $C_4$-Alkyl oder $C_3$-$C_{12}$-Alkyl, das durch 1 bis 3 Sauerstoffatome unterbrochen ist und durch $C_1$-$C_4$-Alkanoyloxy, Cyclohexyloxy, Phenoxy, das gegebenenfalls durch $C_1$-$C_4$-Alkoxy substituiert ist, oder Phenyl substituiert sein kann, und

$R^4$ Wasserstoff oder $C_1$-$C_4$-Alkyl bedeuten,

mit der Maßgabe, daß

a) die Reste $L^1$, $L^2$ und $L^3$ nicht gleichzeitig für Wasserstoff stehen, und

b) wenn zwei der Reste aus der Menge $L^1$, $L^2$ und $L^3$ Wasserstoff bedeuten, der dritte Rest für $C_1$-$C_4$-Alkoxy steht.

2. Phenonazofarbstoffe nach Anspruch 1, dadurch gekennzeichnet, daß
   $R^1$ einen Rest der Formel

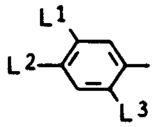

,

in der zwei der Reste aus der Menge $L^1$, $L^2$ und $L^3$ für Wasserstoff und der dritte Rest für $C_1$-$C_2$-Alkoxy oder zwei der Reste aus der Menge $L^1$, $L^2$ und $L^3$ für Methyl und der dritte Rest für Wasserstoff stehen,

$R^2$ Cyano, und
$R^4$ Wasserstoff oder $C_1$-$C_4$-Alkyl bedeuten und
$R^3$ die in Anspruch 1 genannte Bedeutung besitzt.

3. Verfahren zur Übertragung von Azofarbstoffen von einem Träger auf ein mit Kunststoff beschichtetes Papier durch Diffusion mit Hilfe eines Thermokopfes, dadurch gekennzeichnet, daß man einen Träger verwendet, auf dem sich ein oder mehrere Azofarbstoffe der Formel II

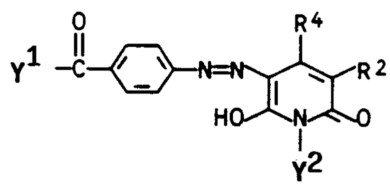

(II)

befinden, in der
$Y^1$ $C_1$-$C_4$-Alkyl, das gegebenenfalls durch $C_1$-$C_4$-Alkoxy substituiert ist, oder einen Rest der Formel

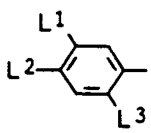

,

wobei $L^1$, $L^2$ und $L^3$ gleich oder verschieden sind und unabhängig voneinander jeweils für Wasserstoff, $C_1$-$C_4$-Alkyl oder $C_1$-$C_4$-Alkoxy stehen,

$R^2$ Cyano, Carbamoyl oder Acetyl,
$Y^2$ $C_1$-$C_4$-Alkyl oder $C_3$-$C_{12}$-Alkyl, das durch 1 bis 3 Sauerstoffatome unterbrochen ist und durch $C_1$-$C_4$-Alkanoyloxy, Cyclohexyloxy, Phenoxy, das gegebenenfalls durch $C_1$-$C_4$-Alkoxy substituiert ist, oder Phenyl substituiert sein kann, und
$R^4$ Wasserstoff oder $C_1$-$C_4$-Alkyl bedeuten,

mit der Maßgabe, daß die Reste $L^1$, $L^2$ und $L^3$ nicht gleichzeitig für Wasserstoff stehen.

4. Verwendung der Phenonazofarbstoffe gemäß Anspruch 1 zum Färben oder Bedrucken von Synthetischen Geweben.

## Claims

1. A phenoneazo dye of the formula I

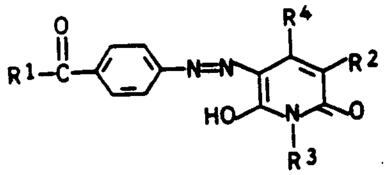

(I)

where

$R^1$ is a radical of the formula

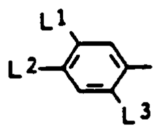

,

where $L^1$, $L^2$ and $L^3$ are identical or different and each is independently of the others hydrogen, $C_1$-$C_4$-alkyl or $C_1$-$C_4$-alkoxy,

$R^2$ is cyano, carbamoyl or acetyl,

$R^3$ is $C_4$-alkyl or $C_3$-$C_{12}$-alkyl which is interrupted by from 1 to 3 oxygen atoms and may be substituted by $C_1$-$C_4$-alkanoyloxy, cyclohexyloxy, phenoxy which may be $C_1$-$C_4$-alkoxy-substituted or phenyl, and

$R^4$ is hydrogen or $C_1$-$C_4$-alkyl,

with the proviso that

a) $L^1$, $L^2$ and $L^3$ are not all hydrogen at one and the same time, and

b) when two of $L^1$, $L^2$ and $L^3$ are hydrogen, the third is $C_1$-$C_4$-alkoxy.

2. A phenoneazo dye as claimed in claim 1, wherein

$R^1$ is a radical of the formula

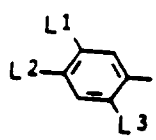

,

in which two members of the set $L^1$, $L^2$ and $L^3$ are each hydrogen and the third member is $C_1$-$C_2$-alkoxy or two members of the set $L^1$, $L^2$ and $L^3$ are each methyl and the third is hydrogen,

$R^2$ is cyano,

$R^4$ is hydrogen or $C_1$-$C_4$-alkyl and

$R^3$ is as defined in claim 1.

3. A process for transferring azo dyes from a transfer to a plastic-coated paper by diffusion with the aid of a thermal printing head, which comprises using a transfer on which there is or are one or more azo dyes of the formula II

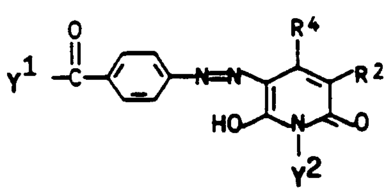

(II)

where

$Y^1$ is $C_1$-$C_4$-alkyl which may be $C_1$-$C_4$-alkoxy-substituted or a radical of the formula

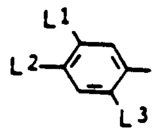

,

where $L^1$, $L^2$ and $L^3$ are identical or different and each is independently of the others hydrogen, $C_1$-$C_4$-alkyl or $C_1$-$C_4$-alkoxy,

$R^2$ is cyano, carbamoyl or acetyl,

$Y^2$ is $C_1$-$C_4$-alkyl or $C_3$-$C_{12}$-alkyl which is interrupted by from 1 to 3 oxygen atoms and may be substituted by $C_1$-$C_4$-alkanoyloxy, cyclohexyloxy, phenoxy which may be $C_1$-$C_4$-alkoxy-substituted or phenyl, and

$R^4$ is hydrogen or $C_1$-$C_4$-alkyl,

with the proviso that $L^1$, $L^2$ and $L^3$ are not all hydrogen at one and the same time.

**4.** The use of a phenoneazo dye as claimed in claim 1 for dyeing or printing synthetic fabrics.

**Revendications**

**1.** Colorants phénone-azoïques de formule I

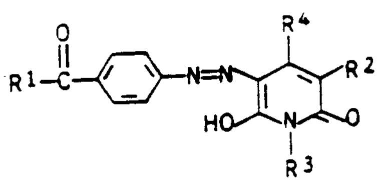

(I),

dans laquelle

$R^1$ représente un reste de formule

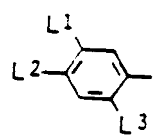

,

où $L^1$, $L^2$ et $L^3$ sont identiques ou différents et sont mis chacun, indépendamment les uns des autres, pour un atome d'hydrogène ou pour un reste alkyle en $C_1$-$C_4$ ou alcoxy en $C_1$-$C_4$,

$R^2$ représente un reste cyano, carbamoyle ou acétyle,

$R^3$ représente un reste alkyle en $C_4$ ou un reste alkyle en $C_3$-$C_{12}$ qui est interrompu par 1 à 3 atomes d'oxygène et peut être substitué par un groupement alcanoyloxy en $C_1$-$C_4$, cyclohexyloxy, phénoxy qui est éventuellement substitué par un reste alcoxy en $C_1$-$C_4$, ou phényle, et

$R^4$ représente un atome d'hydrogène ou un reste alkyle en $C_1$-$C_4$,

étant spécifié que

a) les restes $L^1$, $L^2$ et $L^3$ ne sont pas mis en même temps pour des atomes d'hydrogène et

b) lorsque deux des restes $L^1$, $L^2$ et $L^3$ représentent des atomes d'hydrogène, le troisième reste est mis pour un radical alcoxy en $C_1$-$C_4$.

**2.** Colorants phénone-azoïques selon la revendication 1, caractérisés en ce que

R [1] représente un reste de formule

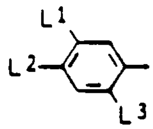,

où deux des restes $L^1$, $L^2$ et $L^3$ représentent des atomes d'hydrogène et le troisième reste est mis pour un radical alcoxy en $C_1$-$C_2$, ou deux des restes $L^1$, $L^2$ et $L^3$ sont mis pour des radicaux méthyle et le troisième reste est mis pour un atome d'hydrogène,

$R^2$ représente un reste cyano,

$R^4$ représente un atome d'hydrogène ou un reste alkyle en $C_1$-$C_4$ et

$R^3$ a la signification donnée dans la revendication 1.

**3.** Procédé de transfert de colorants azoïques d'un support à un papier recouvert d'une couche de matière plastique par diffusion au moyen d'une tête thermique, caractérisé en ce qu'on utilise un support sur lequel se trouvent un ou plusieurs colorants azoïques de formule II

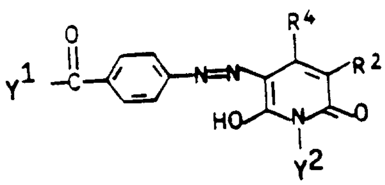

(II)

dans laquelle

$Y^1$ représente un reste alkyle en $C_1$-$C_4$ qui est éventuellement substitué par un radical alcoxy en $C_1$-$C_4$,ou un reste de formule

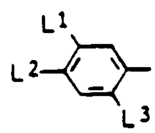,

où $L^1$, $L^2$ et $L^3$ sont identiques ou différents et sont mis chacun, indépendamment les uns des autres, pour un atome d'hydrogène ou pour un reste alkyle en $C_1$-$C_4$ ou alcoxy en $C_1$-$C_4$,

$R^2$ représente un reste cyano, carbamoyle ou acétyle,

$Y^2$ représente un reste alkyle en $C_1$-$C_4$ ou un reste alkyle en $C_3$-$C_{12}$ qui est interrompu par 1 à 3 atomes d'oxygène et peut être substitué par un groupement alcanoyloxy en $C_1$-$C_4$, cyclohexyloxy, phénoxy qui est éventuellement substitué par un reste alcoxy en $C_1$-$C_4$, ou phényle, et

$R^4$ représente un atome d'hydrogène ou un reste alkyle en $C_1$-$C_4$,

étant spécifié que les restes $L^1$, $L^2$ et $L^3$ ne sont pas mis en même temps pour des atomes d'hydrogène.

**4.** Utilisation des colorants phénone-azoïques selon la revendication 1 pour la teinture ou l'impression de tissus synthétiques.